# EUROPÄISCHE PATENTSCHRIFT

(11) **EP 0 796 162 B1**
(45) Veröffentlichungstag und Bekanntmachung des Hinweises auf die Patenterteilung: **15.04.1998**
(21) Anmeldenummer: 95942103.3
(22) Anmeldetag: 11.12.1995
(51) Int. Cl.: B23B 51/04, B23B 27/14

(54) **BOHRWERKZEUG FÜR BOHRUNGEN IN METALLVOLLMATERIAL**
DRILLING TOOL FOR DRILLING IN SOLID METAL
OUTIL DE PER AGE POUR MATERIAU METALLIQUE MASSIF

(30) Priorität: 10.12.1994 DE 4444022; 14.10.1995 DE 19538391
(43) Veröffentlichungstag der Anmeldung: 24.09.1997
(73) Patentinhaber: KENNAMETAL HERTEL AG Werkzeuge + Hartstoffe, 90766 Fürth (DE)
(72) Erfinder: KRENZER, Ulrich, D-90513 Zirndorf (DE)
(74) Vertreter: Tergau, Enno, Dipl.-Ing.
(86) Internationale Anmeldenummer: EP9504872
(87) Internationale Veröffentlichungsnummer: WO9618472

(56) Entgegenhaltungen:
- WO-A-95/29782
- DE-A- 4 239 235
- DE-A- 4 239 236

## Beschreibung

Die Erfindung betrifft ein Bohrwerkzeug nach dem Oberbegriff des Anspruches 1 und wie bekannt z.B. aus EP-A-0181844.

Derartige Bohrwerkzeuge werden in der Praxis auch allgemein als Wendeplattenbohrer bezeichnet.

Bei Bohrbearbeitungen mit derartigen Wendeplattenbohrern fließen die Späne grundsätzlich bogenförmig gekrümmt von den Schneidkanten ab. Die Spankrümmung wird durch die unterschiedlichen Schnittgeschwindigkeiten an einzelnen Punkten bzw. Teilbereichen der Schneidkanten hervorgerufen. Die Späne fließen grundsätzlich von der Bohrungswandung in Richtung zur Bohrwerkzeugachse radial nach innen.

Derartige Bohrwerkzeuge nach dem Stand der Technik sind mit Umsetzschneidplatten bestückt, deren Spanflächen Spanformstufen tragen. Die auf den Spanflächen befindlichen Spanformstufen sind annähernd parallel zu den Hauptschneiden orientiert (EP 0 181 844 B1), auch wenn es sich dabei um nach Art von punktförmigen Warzen auf die Spanflächen aufgesetzte, höckerartige Gebilde handelt (US 4 215 957 A). Die Spanformung wird herkömmlich also dadurch erreicht, daß dem ablaufenden Span Hindernisse in den Weg gestellt werden. Der Span wird folglich unter hohen Kräften plastisch verformt und umgehend in eine neue Richtung gelenkt.

Der Erfindung liegt die Aufgabe zugrunde, ein Bohrwerkzeug der eingangs genannten Art mit Einrichtungen zur Spanformung zu versehen, die eine Spanabfuhr über die Spannuten begünstigt. Diese Aufgabe wird durch Anspruch 1 gelöst. Die an der Stirnseite eines Bohrergrundkörpers am Ende jeweils einer Spannut, in je einer Aussparung angeordneten, auswechselbaren Umsetzschneidplatten sind derart ausgestaltet, daß ihre Spanfläche nach Art von Gleitkufen wirksame nebeneinander angeordnete Spanformrippen enthält. Im Bereich der Schneidkanten der Umsetzschneidplatte sind die Gleitkufen annähernd normal zu diesen ausgerichtet und verlaufen von dort in etwa in Spanablaufrichtung mit bogenförmigem Verlauf bezüglich der Einbaustellung radial einwärts in Richtung eines der Bohrwerkachse nahen Flankenbereichs der Umsetzschneidplatte. Der bogenförmige Verlauf der Spanformrippen bzw. -rillen ist dabei so gewählt, daß er weitgehend der natürlichen bzw. optimalen Ablaufrichtung des Spanes entspricht. Diese Spanablaufrichtung wird beim Bohren nicht absolut zuverlässig eingehalten. Durch verschiedene Einflüsse, die etwa auf wechselnde Vorschubgeschwindigkeiten, das Werkstückmaterial etc. zurückzuführen sind, kann der Span von seiner idealen Ablaufrichtung abweichen mit der Folge, daß die gebildete Spanlocke bzw. Wendel nicht störungsfrei und insbesondere reibungsarm aus der Spankammer abtransportiert wird. Die erfindungsgemäßen Spanformrippen verhindern dies, indem sie das bogenförmige Abfließen der Späne radial nach innen in Richtung auf die Bohrerachse unterstützen. Die Spanformrippen halten die ablaufenden Späne geradezu zwangsläufig in der Richtung ihres Ablaufes von den Schneidkanten. Die Spanformrippen bzw. -rillen bilden sich nämlich auch auf den Spänen ab, wodurch quasi eine Zwangsführung entsteht. Ein weiterer vorteilhafter Effekt dieser wellblechartigen Formung des Spanes liegt in seiner in Spanlängsrichtung wirksamen Versteifung. Die Versteifungswirkung der wendelförmigen Späne ergibt eine Vergleichmäßigung der Spanformung und dadurch eine Verbesserung der Spanabführung aus der Bohrung heraus durch eine hohe Gleichmäßigkeit des Spantransports. Die nachfolgenden Späne schieben gewissermaßen die vorher entstandenen aus der Bohrung heraus. Ein Einklemmen dieser verhältnismäßig großen Spanlocken zwischen dem Bohrwerkzeugkörper und der Bohrungswand ist nahezu unmöglich.

Die Spanformrippen sind vorzugsweise stetig in Richtung auf ihren Auslaufbereich gekrümmt. Dadurch ist gewährleistet, daß die Gleitbewegung des Spans auf den Spanformrippen bzw. in den dazwischen liegenden Spanformrillen möglichst reibungs- und widerstandsfrei erfolgt. Die Spanformrippen verlaufen vorzugsweise bis zu dem in ihrer Einbaustellung radial einwärts und nahe der Bohrwerkzeugachse liegenden Flankenbereich und laufen dort mit einer etwa normalen Ausrichtung zur Bohrwerkzeugachse aus. Dadurch ist eine Führung des Spans praktisch über die gesamte sich radial zur Bohrwerkzeugachse erstreckenden Breite der Schneidplatte geführt. Dadurch ist gewährleistet, daß der Span in einem exakt vorbestimmten Winkel auf die Spannutinnenwand auftrifft und dort möglichst reibungsarm weitertransportiert wird.

Die Spanformrippen sind durch mit Abstand nebeneinander angeordnete Ausnehmungen oder Spanformrillen gebildet, wobei die Spanformrippen im Querschnitt etwa kreisbogen- oder ellipsenförmig sind. Diese Ausgestaltung kommt der Forderung nach einer möglichst reibungsarmen Spanabfuhr entgegen. Die Spanformrippen können auch eine etwa trapezförmige Querschnittsform aufweisen, wobei die Trapez-Seitenflanken konkav ausgemuldet sind. Durch diese Form und insbesondere durch die von der Scheitelfläche der Spanformrippen und einer konkaven Flanke gebildete relativ scharfe Kante ist der Formschlußeingriff zwischen Span und Spanfläche und damit die Zwangsführung des Spans verbessert.

Vorteilhaft ist es, wenn die Ausnehmungen oder Spanformrillen die Schneidkanten der Umsetzschneidplatte durchbrechen. Die Abbildung der Spanformrippen bzw. der dazwischen liegenden Spanformrillen in der Rückenfläche des vom zu bearbeitenden Material abgehobenen Spans erfolgt dann praktisch gleichzeitig mit der Spanbildung bzw. Spanabhebung. Aufgrund des in dem genannten Zeitpunkt noch in höherem Maße verformungsfähigen Materials erfolgt eine deutlichere Abbildung der Spanformrippen in der Spanrückenfläche, wodurch der Formschlußeingriff zwischen Span und Spanformrippen und folglich die Zwangsführung des Spans verbessert ist. Es ist es auch vorteilhaft, wenn die Spanformrillen den in Einbaustellung radial einwärts der Bohrwerkzeugachse nahen Flankenbereich der Schneidplatte ebenfalls durchbrechen. Der Span kann dann widerstandsfrei aus der Wendeplatte in den Spannutbereich übergleiten.

Der Vorteil einer konkav ausgemuldeten Spanfläche der Schneidplatte besteht darin, daß die beim Zerspanungsvorgang anfallenden Späne durch die konkave Ausmuldung bzw. durch die Rinnenform der Schneidplatte so geformt werden, daß sie unter einem stumpfen Winkel auf die Spannutwand auftreffen. Durch die Rinnenform der Schneidplatten sind sie bereits so geformt, daß der Durchmesser des Wendelspanes bzw. der Spanlocke problemlos in das zur Verfügung stehende Spankammervolumen hineinpaßt. In Zusammenwirkung mit der erfindungsgemäßen Zwangsführung des Spans wird daher ein optimaler Abtransport des Spans aus der Spankammer gewährleistet.

In vielen, teilweise sogar in den meisten Fällen kann es sinnvoll sein, die Spanformrippen bzw. -rillen noch stärker zu krümmen als dies dem ungehinderten Spanablauf entspricht. Das bedeutet, daß die Späne in dem zur Bohrerachse nähergelegenen Bereich durch die Spanformrippen bzw. -rillen stärker gebremst werden als in dem weiter außenliegenden Bereich.

Der Gegenstand der Erfindung wird anhand von in den Figuren dargestellten Ausführungsbeispielen näher erläutert. Es zeigen:
- Fig.1: Das spitzenseitige Ende eines erfindungsgemäßen Bohrwerkzeuges mit zwei Umsetzschneidplatten in perspektivischer Ansicht,
- Fig.2: eine Umsetzschneidplatte nach Fig. 1 in vergrößerter perspektivischer Darstellung,
- Fig.3: ein Bohrwerkzeug gemäß Fig.1 in perspektivischer Darstellung, das die Bildung eines Spans im Wirkbereich der Schneide der Umsetzschneidplatte schematisch darstellt,
- Fig.4: eine weitere Ausführungsform einer Umsetzschneidplatte in Draufsicht,
- Fig.5: eine Ansicht der Umsetzschneidplatte von Fig.4 in Richtung des Pfeiles V,
- Fig.6: einen Querschnitt längs der Linie VI-VI in Fig.4,
- Fig.7: eine Ansicht in Richtung des Pfeiles VII in Fig.4, und
- Fig.8: eine erfindungsgemäß ausgestaltete Trigon-Umsetzsschneidplatte.

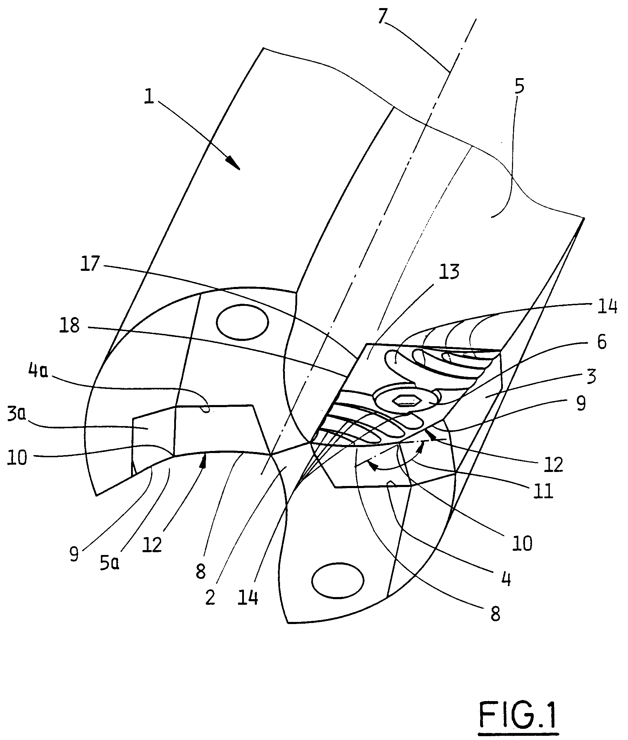

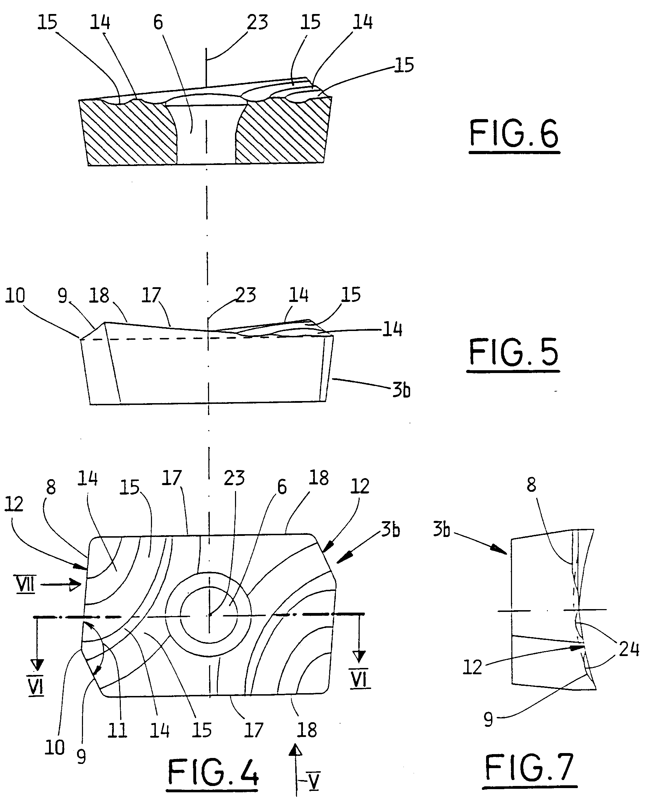

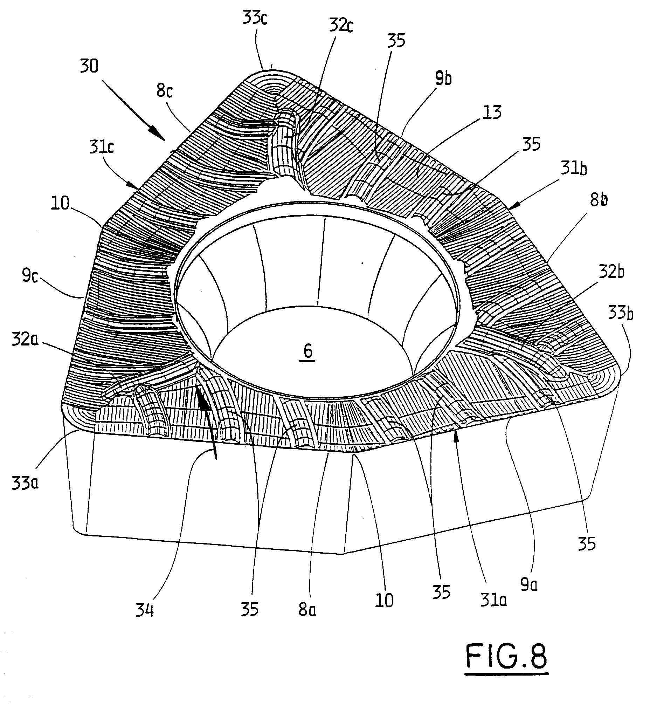

Das Bohrwerkzeug besteht im wesentlichen aus dem Grundkörper 1 mit im Bereich der Bohrerspitze 2 angeordneten und als Umsetzschneidplatten ausgebildeten Schneidplatten 3,3a. Die Schneidplatten 3,3a liegen in Aussparungen 4,4a ein und sind dort z.B. mit einer Schraube befestigt. Sie weisen zu diesem Zweck eine zentrale Fixierbohrung 6 auf. Sie stehen in unterschiedlichem Radialabstand zur Mittellängsachse des Grundkörpers 1 und die Arbeitsbereiche der beiden Schneidplatten 3,3a grenzen - sich etwas überdeckend - aneinander. Die Mittellängsachse bildet die Bohrwerkzeugachse 7. Die Schneidplatten 3,3a können eine längliche, etwa quaderähnliche Umrißform (Fig. 1 und 4) aufweisen, aber auch sogenannte Trigon-Platten (Fig. 8) sein. Ein beiden Schneidplattenformen gemeinsames Merkmal ist das Vorhandensein von jeweils zwei im Schnitt stehenden Schneidkanten 8,9, die in einer Schneidspitze 10 zusammenlaufen, einen stumpfen Spitzenwinkel 11 einschließen und gemeinsam die Schneide 12 der Schneidplatte bilden. Selbstverständlich sind auch Schneidplatten mit einfacherer Grundgeometrie einsetzbar, etwa solche mit quadratischer, dreieckiger und rhombischer Umrißform, bei denen die Schneide nicht aus mehrerer Teilschneiden besteht.

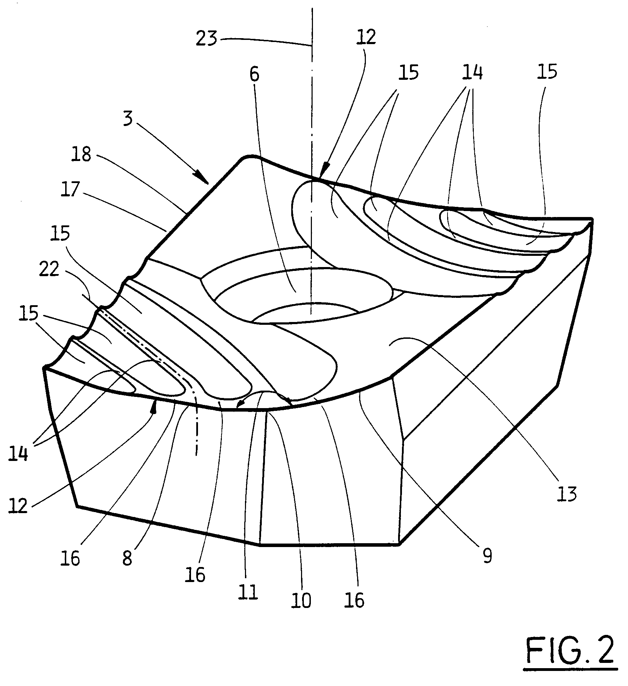

Die Spanfläche 13 kann eben oder auch - sogar bevorzugt - nach Art einer bogenförmigen Rinne oder - insbesondere bei Trigon-Platten - löffelförmig ausgemuldet sein. Die jeder Schneide 12 zugeordnete Spanfläche 13 enthält erfindungsgemäß z.B. durch entsprechende Rillung nach Art von Gleitkufen wirksame, nebeneinander angeordnete Spanformrippen 14. Die Spanformrippen 14 zeichnen sich durch einen besonderen bogenförmigen Längsverlauf aus. Im Bereich der Schneidkanten 8,9 verlaufen sie zunächst annähernd normal, d.h. in einem etwa annähernd rechten Winkel zu den Schneidkanten 8,9 (vgl. Linie 22 in Fig.2). Von dort sind sie in Spanablaufrichtung, nämlich in Richtung auf die Bohrwerkzeugachse des Bohrwerkzeugs, radial einwärts abgebogen.

Wie gesagt, sind die Spanformrippen 14 dadurch gebildet, daß in die Spanfläche 13 rillenförmige Ausnehmungen, nämlich Spanformrillen 15 eingeformt sind. Der Verlauf der Spanformrillen 15 ist derart gewählt, daß die zwischen ihnen stehenbleibendenden Spanformrippen 14 den erfindungsgemäßen Verlauf nehmen. Wie aus Fig.1-3 ersichtlich ist, enden die Spanformrillen 15 mit Abstand vor der Schneide 12 bzw. den Schneidkanten 8 und 9. Zwischen dem Ende der Spanformrillen 15 und der Schneide 12 ist jeweils ein Steg 16 angeordnet. Der Vorteil dieser Ausgestaltung liegt in einer fertigungstechnischen Vereinfachung. Die Breite der Stege 16 soll möglichst gering sein, um ein Einfließen des vom Werkstück abgehobenen Spanmaterials in die Spanformrillen zu ermöglichen. Im Moment der Spanentstehung befindet sich das Werkstückmaterial nämlich noch in einem plastisch leichter verformbaren Zustand, als dies mit zunehmender Entfernung vom Schneidenwirkort der Fall ist. Je geringer deshalb die Breite der Stege 16 ist, desto näher befinden sich die Enden der Spanformrillen im plastisch verformbaren Bereich des sich bildenden Spans. Aus Stabilitätsgründen sind der Verringerung der Breite der Stege 16 natürliche Grenzen gesetzt. In dem der Bohrwerkzeugachse 7 nahen Flankenbereich 17 weisen die Spanformrippen 14 eine etwa normale Ausrichtung zur Bohrwerkzeugachse 7 bzw. zur Seitenkante 18 des Flankenbereichs 17 auf. Zwischen der im Einsatz befindlichen Schneide 12 und dem achsnahen Flankenbereich 17 der Schneidplatte 3 erstreckt sich also der Rippenbogen mit vorzugsweise stetiger Krümmung bzw. Biegung zwischen seinen beiden Rippenenden. Im Flankenbereich 17 enden die Spanformrillen 15 nicht vor der Seitenkante 18, sondern durchbrechen diese. Die Seitenkante 18 weist somit im Mündungsbereich der Spanformrillen 15 einen gewellten Verlauf auf. Durch diese Ausgestaltung ist gewährleistet, daß der Span widerstandsfrei abfließen und in den Spannutbereich des Bohrwerkzeugs übertreten kann.

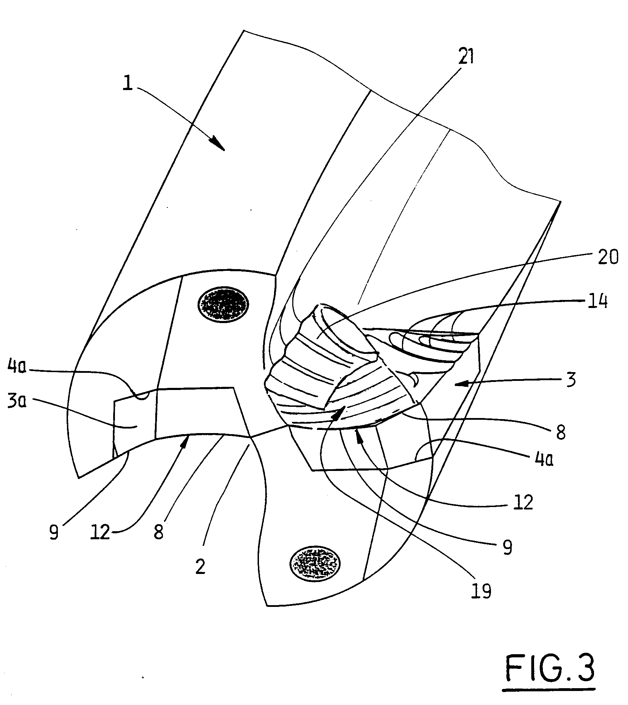

Um den bogenförmigen Ablauf der Späne zusätzlich zu begünstigen, steigt der Spanwinkel einer Schneidkante 8 bzw. 9 mit zunehmendem Abstand von der Bohrerachse 17 bevorzugt positiv an. Hierdurch ergibt sich eine geringere Spanstauchung in den radial äußeren Bereichen der Schneide. Diese unterschiedliche Spanstauchung über die gesamte Spanbreite unterstützt die Spanformung zu einem Wendel. Die Bildung eines Spanwendels 19 ist in Fig. 3 schematisch dargestellt. In dieser Abbildung ist auch angedeutet, daß sich die Spanformrippen 14 und die Spanformrillen 15 auf der bei der Spanbildung der Spanfläche 13 zugewandte Rückenfläche 20 der Spanwendel 19 in gewissem Ausmaß nach Art einer wellblechartigen Riffelung 21 abbilden.

In den Fig. 4 bis 7 ist eine erfindungsgemäße Schneidplatte 3b dargestellt, die in ihrer Spanfläche 13 bogenförmige und sich jeweils von der Schneide 12 bogenförmig zur Seitenkante 18 erstrecken. Wie schon bei der Schneidplatte 3,3a der Fig.1 bis 3 ist, wie bei Umsetzschneidplatten der in Rede stehenden Art üblich, eine zweite Schneide 12 und zweite Spanformrippen 14 und Spanformrillen 15 in symmetrischer Anordnung vorhanden, wobei in diesem Falle eine zweizählige Symmetrieachse vorhanden ist, die von der Mittellängsachse 23 der Fixierbohrung 6 gebildet ist. Der wesentliche Unterschied dieser Schneidplatte 3b zu der in den Fig.1 bis 3 dargestellten, besteht darin, daß die Spanformrillen 15 die Schneide 12 durchbrechen. Die Schneide 12 hat daher in Blickrichtung des Pfeiles VII in Fig.4 bzw. in Richtung der Längserstreckung der Schneidplatte 3b gesehen, einen etwa wellenförmigen Verlauf. Die Schneide 12,12' weist demnach konkave Ausmuldungen 24 auf, die durch die Spanformrippen 15 voneinander getrennt sind. Die Folge dieser Ausgestaltung ist, daß die negative Abbildung der Spanformrippen 14 und Spanformrillen 15 direkt bei der Spanbildung erfolgt, da zwischen Schneide 12 und Spanformrille 15 kein Steg vorhanden ist. Die Spanwendel 19 wird von Anfang an mit einer wellblechartig geriffelten Rückenfläche 20 (entsprechend Fig.3) vom Werkstückmaterial abgehoben. Die Spanformrippen 14 und Spanformrillen 15 sind bei dieser Ausgestaltung noch deutlicher in Form einer wellblechartigen Riffelung 21 auf der Rückenfläche 20 der Spanwendel abgebildet, als dies bei der Ausführungsform der Fig.1-3 der Fall ist. Der Formschlußeingriff zwischen der Rückenfläche 20, der Spanfläche 19 und den Spanformrippen 14 und Spanformrillen 15 und damit die Zwangsführung des Spanwendels 19 ist stärker ausgeprägt. Die Spanformeigenschaften und insbesondere die Zwangsführung in Richtung der Ablaufrichtung des Spans sind bei der Schneidplatte 3b also noch stärker ausgeprägt.

In Fig.8 ist eine Trigon-Schneidplatte 30 dargestellt. Solche Trigon-Schneidplatten weisen insgesamt 3 Schneiden 31a,31b und 31c auf, die jeweils durch im Schnitt stehende Schneidkanten 8,9 gebildet sind. Die Trigon-Schneidplatte 30 weist auf ihrer Spanfläche 13 neben den bereits oben beschriebenen bogenförmig gekrümmten Spanformrippen 35, drei Radialrippen 32a, 32b, 32c auf, die jeweils etwa entlang der Verbindungslinie zwischen einer Schneidplattenecke 33 und dem Zentrum der Trigon-Schneidplatte verlaufen. Wenigstens eine der im Bereich der Radialrippen 32a, 32b und 32c angeordneten Spanformrippen 35 mündet in eine Radialrippe 32a, 32b, 32c. Der Schneidkante 8a sind insgesamt drei Spanformrippen 35 zugeordnet, von denen die zwei der Schneidplattenecke 33a benachbarten in die Radialrippe 32a münden. Von den der Schneide 31c bzw. der Schneidkante 9c zugeordneten Spanformrippen 35 mündet nur die der Schneidplattenecke 33a benachbarte Spanformrippe 35 in die Radialrippe 32a. Entsprechende Verhältnisse liegen auch in den der Schneidplattenecke 33b und 33c zugeordneten Spanflächenbereichen vor. Bis auf die jeweils einer Schneidplattenecke 33a, 33b, 33c am nächsten liegende, münden alle Spanformrippen 35 und auch die Radialrippen 32a, 32b und 32c in der Fixierbohrung 6 bzw. sie erstrecken sich bis zu deren Rand. Im Gegensatz zu der Schneidplatte gem. Fig.1 oder 4 sind die zwischen den Spanformrippen 35 angeordneten Ausmuldungen breiter und weniger rillenförmiger angelegt. die Ausgestaltung ist so, daß, wenn man sich die Spanformrippen 35 und die Radialrippen 32 wegdenkt, die Deckfläche bzw. die Spanfläche 13 eine kontinuierlich verlaufende, gegebenenfalls konkav ausgemuldete oder löffelförmige Fläche ist.

Die Radialrippen 32 dienen dazu, einen von der Schneide, etwa der Schneide 31, vom Werkstück abgehobenen und sich in Pfeilrichtung 34 auf die Radialrippe 32a bewegenden Span nach Art einer Spanleitstufe von der Spanfläche 13 abzuheben. Dadurch wird verhindert, daß der Span seitlich auf eine Spanformrippe der der Bohrwerkzeugachse 7 im Montagezustand naheliegenden Schneide 31c auftrifft und dadurch unkontrolliert von der opitmalen Spanablaufrichtung abgelenkt wird. Die Bildung einer Spanwendel kann auch im Falle einer Trigon-Schneidplatte durch eine konkav oder löffelförmig ausgemuldete Spanfläche 13 begünstigt sein.

### Bezugszeichenliste

- 1: Grundkörper
- 2: Bohrerspitze
- 3: Schneidplatte
- 3a: Schneidplatte
- 3b: Schneidplatte
- 4,4a: Aussparung
- 5,5a: Spannut
- 6: Fixierbohrung
- 7: Bohrwerkzeugachse
- 8: Schneidkante
- 9: Schneidkante
- 10: Schneidspitze
- 11: Spitzenwinkel
- 12: Schneide
- 13: Spanfläche
- 14: Spanformrippe
- 15: Spanformrille
- 16: Steg
- 17: Flankenbereich
- 18: Seitenkante
- 19: Spanwendel
- 20: Rückenfläche
- 21: Riffelung
- 22: Linie
- 23: Mittellängsachse
- 24: Ausmuldung
- 30: Trigon-Schneidplatte
- 31a: Schneide
- 31b: Schneide
- 31c: Schneide
- 32a: Radialrippe
- 32b: Radialrippe
- 32c: Radialrippe
- 33a: Schneidplattenecke
- 33b: Schneidplattenecke
- 33c: Schneidplattenecke
- 34: Pfeilrichtung
- 35: Spanformrippen

## Patentansprüche

1. Bohrwerkzeug für Bohrungen in Metallvollmaterial
- mit einem wenigstens eine Spannute (5,5a) enthaltenden Grundkörper (1),
- mit wenigstens einer an der Stirnseite des Grundkörpers (1) am Ende jeweils einer Spannut (5,5a) in einer Aussparung (4,4a) angeordneten, auswechselbaren Umsetzschneidplatte (3,3a) und
- mit einer Schneide (12), die vorzugsweise von zwei einen stumpfen Spitzenwinkel (11) miteinander bildenden Schneidkanten (8,9) gebildet ist,
dadurch gekennzeichnet,
daß die Spanfläche (13) der Schneiden (12) nach Art von Gleitkufen wirksame, nebeneinander angeordnete Spanformrippen (14,14a) enthält,
die im Bereich der Schneide (12) bzw. der Schneidkanten (8,9) annähernd normal zu diesen ausgerichtet und von dort etwa in Spanablaufrichtung mit bogenförmigem Verlauf bezüglich ihrer Einbaustellung radial einwärts in Richtung eines der Bohrwerkzeugachse (7) nahen Flankenbereichs (17) der Schneidplatte (3,3a) auslaufen.

2. Bohrwerkzeug nach Anspruch 1,
gekennzeichnet durch
eine Stetigkeit der Biegung der Spanformrippen (14,14a) in Richtung auf ihren Auslaufbereich.

3. Bohrwerkzeug nach einem der Ansprüche 1 oder 2,
dadurch gekennzeichnet,
daß sich die Spanformrippen (14, 14a ) mit fortgesetzt bogenförmigen Verlauf radial einwärts bis zum Flankenbereich (17) der Schneidplatte (3,3a) erstrecken und dort eine etwa normale Ausrichtung zur Bohrwerkzeugachse (7) aufweisen.

4. Bohrwerkzeug nach einem der Ansprüche 1 bis 3,.
dadurch gekennzeichnet,
daß die Spanformrippen (14,14a) durch mit Abstand nebeneinander angeordnete Ausnehmungen oder Spanformrillen (15) gebildet sind.

5. Bohrwerkzeug nach einem oder mehreren der Ansprüche 1 bis 4,
dadurch gekennzeichnet,
daß die Spanformrippen (14,14a) im Querschnitt ungefähr kreisbogen- oder elipsenförmig ausgebildet sind.

6. Bohrwerkzeug nach einem oder mehreren der Ansprüche 1 bis 5,
dadurch gekennzeichnet,
daß die Spanformrippen (14,14a) im Querschnitt die Form eines Trapezes aufweisen, dessen Flanken konkav ausgemuldet sind.

7. Bohrwerkzeug nach einem oder mehreren der Ansprüche 1 bis 6,
dadurch gekennzeichnet,
daß die Spanformrillen (15) die Schneide (12,12') durchbrechen.

8. Bohrwerkzeug nach einem oder mehreren der Ansprüche 1 bis 7,
dadurch gekennzeichnet,
daß die Spanformrillen (15) die den Flankenbereich (17) der Schneidplatte (3,3a) begrenzende Seitenkante (18) durchbrechen.

9. Bohrwerkzeug nach einem oder mehreren der vorhergehenden Ansprüche,
gekennzeichnet durch
mindestens zwei nebeneinander angeordnete, einer Schneide (12) zugeordnete Spanformrippen (14,14a).

10. Bohrwerkzeug nach einem oder mehreren der vorhergehenden Ansprüche,
dadurch gekennzeichnet,
daß die Spanflächen (13) der Schneidplatten (3,3a) konkav ausgemuldet sind.

11. Bohrwerkzeug nach einem oder mehreren der vorhergehenden Ansprüche,
dadurch gekennzeichnet,
daß die Krümmung der Spanformrippen (14,14a) größer bzw. enger ist als diejenige des ungehinderten bzw. optimalen Spanablaufes.

12. Bohrwerkzeug nach einem oder mehreren vorhergehenden Ansprüche,
dadurch gekennzeichnet,
daß die Schneidplatte eine Trigon-Schneidplatte (30) mit einer zentralen Fixierbohrung (6) ist, auf deren Spanfläche (13) drei Radialrippen (32a,32 b,32c) angeordnet sind,
- die jeweils etwa entlang der Verbindungslinie zwischen einer Schneidplattenecke (33a,33b,33c) und dem Mittelpunkt der Trigon-Schneidplatte (30) verlaufen
- und in die wenigstens eine der einer Schneidplattenecke (33a,33b,33c) benachbarten Spanformrippen (14) mündet.

13. Bohrwerkzeug nach Anspruch 14,
dadurch gekennzeichnet,
daß zumindest die nicht in eine Radialrippe (32a,32b,32c) mündenden Spanformrippen (14) sich bis zur zentralen Fixierbohrung (6) erstrecken.

14. Bohrwerkzeug nach einem oder mehreren der vorhergehenden Ansprüche,
dadurch gekennzeichnet,
daß der Spanwinkel einer von der Bohrwerkzeugachse (7) weiter entfernt liegenden Schneidkante (9) einen größeren positiven Betrag besitzt als der einer näher an der Bohrwerkzeugachse (7) liegenden Schneidkante (8) der gleichen Schneidplatte (3,3a).

## Claims

1. Drilling tool for drilling holes in solid metal
- with a base body (1) which contains at least one chip flute (5, 5a),
- with at least one replaceable cutting insert (3, 3a) on the end surface of the base body (1) located in a recess (4, 4a) on the end of a chip flute (5, 5a), and
- with a blade (12) which is preferably formed by two cutting edges (8, 9) which form an obtuse point angle (11) with one another,
characterized by the fact
that the rake face (13) of the blades (12) contains chip shaping ribs (14, 14a) located next to one another which act in the manner of runners for the chips, which chip shaping ribs, in the vicinity of the blade (12) or of the cutting edges (8, 9), are oriented approximately perpendicular to the cutting edges, and from there the chip shaping ribs extend in the direction of chip removal with a curved profile and with regard to their installed position extend radially inward toward a flank area (17) of the insert (3, 3a), which flank area (17) is close to the rotational axis (7) of the drilling tool.

2. Tool as claimed in Claim 1
characterized by
a constant curvature of the chip shaping ribs (14, 14a) toward their tapered terminal area.

3. Drilling tool as claimed in one of the Claims 1 or 2,
characterized by the fact
that the chip shaping ribs (14, 14a) extend with a continuous curved path radially inward to the flank area (17) of the insert (3, 3a), where they are oriented perpendicular to the axis (7) of the drilling tool.

4. Drilling tool as claimed in one of the Claims 1 to 3,
characterized by the fact
that the chip shaping ribs (14, 14a) are formed by recesses or chip shaping grooves (15) which are located next to and at a distance from one another.

5. Drilling tool as claimed in one of the Claims 1 to 4,
characterized by the fact
that the chip shaping ribs (14, 14a) are realized so that in cross section, they have approximately the shape of a circular arc or ellipse.

6. Drilling tool as claimed in one of the Claims 1 to 5,
characterized by the fact
that in cross section, the chip shaping ribs (14, 14a) have the shape of a trapezoid, the flanks of which are concave.

7. Drilling tool as claimed in one of the Claims 1 to 6,
characterized by the fact
that the chip shaping ribs (15) interrupt the blade (12, 12').

8. Drilling tool as claimed in one of the Claims 1 to 7,
characterized by the fact
that the chip shaping grooves (15) interrupt the lateral edge (18) which defines the flank area (17) of the insert (3, 3a).

9. Drilling tool as claimed in one or more of the preceding claims,
characterized by
at least two chip shaping ribs (14, 14a) which are located next to one another and correspond to a blade (12).

10. Drilling tool as claimed in one or more of the preceding claims,
characterized by the fact
that the rake faces (13) of the inserts (3, 3a) are concave.

11. Drilling tool as claimed in one or more of the preceding claims,
characterized by the fact
that the curvature of the chip shaping ribs (14, 14a) is greater or less than the curvature of the unhindered or optimal chip removal path.

12. Drilling tool as claimed in one or more of the preceding claims,
characterized by the fact
that the insert is a trigonal insert (30) which has a central fastening hole (6), on the rake face (13) of which there are three radial ribs (32a, 32b, 32c):
- each of which runs along the connecting line between one corner (33a, 33b, 33c) of the insert and the center of the trigonal insert (30),
- and into which at least one of the chip shaping ribs (14) next to a corner (33a, 33b, 33c) of the insert merges.

13. Drilling tool as claimed in Claim 14,
characterized by the fact
that at least the chip shaping ribs (14) which do not merge into a radial rib (32a, 32b, 32c) extend to the central fastening hole (6).

14. Drilling tool as claimed in one or more of the preceding claims,
characterized by the fact
that the cutting angle of a cutting edge (9) which is farther from the axis (7) of the drilling tool has a greater positive component than the cutting angle of a cutting edge (8) of the same insert (3, 3a) which lies closer to the axis (7) of the drilling tool.

## Revendications

1. Outil de perçage pour matériau métallique massif, comportant :
- un corps de base (1) comprenant au moins une rainure à copeaux (5, 5a),
- au moins une plaquette de coupe mobile (3, 3a) interchangeable agencée sur la face frontale du corps de base (1) à l'extrémité d'une rainure à copeaux respective (5, 5a) dans un évidement (4, 4a), et
- un tranchant (12) qui est formé de préférence par deux arêtes de coupe (8, 9) formant conjointement un angle de pointe obtus (11),
caractérisé en ce que la face de coupe (13) des tranchants (12) comprend des nervures de formage de copeaux (14, 14a) agissant à la manière de patins coulissants et agencées les unes à côté des autres, qui, dans la région du tranchant (12) ou des arêtes de coupe (8, 9), sont alignées approximativement perpendiculairement à celles-ci et qui se terminent depuis ici approximativement en direction d'évacuation des copeaux avec un tracé en forme de courbe par rapport à leur position de montage, radialement vers l'intérieur en direction d'une région de flanc (17) de la plaquette de coupe (3, 3a), voisine de l'axe (7) de l'outil de perçage.

2. Outil de perçage selon la revendication 1, caractérisé en ce que la courbure des nervures de formage de copeaux (14, 14a) est continue en direction de sa région terminale.

3. Outil de perçage selon l'une ou l'autre des revendications 1 et 2, caractérisé en ce que les nervures de formage de copeaux (14, 14a) s'étendent avec un tracé en forme de courbe qui se poursuit radialement vers l'intérieur jusqu'à la région de flanc (17) de la plaquette de coupe (3, 3a) et présentent ici un alignement approximativement perpendiculaire à l'axe (7) de l'outil de perçage.

4. Outil de perçage selon l'une quelconque des revendications 1 à 3, caractérisé en ce que les nervures de formage de copeaux (14, 14a) sont formées par des évidements ou des rainures de formage de copeaux (15) qui sont agencés à distance les uns à côté des autres.

5. Outil de perçage selon l'une ou plusieurs des revendications 1 à 4, caractérisé en ce que les nervures de formage de copeaux (14, 14a) sont réalisées avec une section transversale approximativement en forme d'arc de cercle ou d'ellipse.

6. Outil de perçage selon l'une ou plusieurs des revendications 1 à 5, caractérisé en ce que les nervures de formage de copeaux (14, 14a) présentent une section transversale en forme de trapèze dont les flancs sont creusés sous forme concave.

7. Outil de perçage selon l'une ou plusieurs des revendications 1 à 6, caractérisé en ce que les rainures de formage de copeaux (15) traversent le tranchant (12, 12').

8. Outil de perçage selon l'une ou plusieurs des revendications 1 à 7, caractérisé en ce que les rainures de formage de copeaux (15) traversent l'arête latérale (18) délimitant la région de flanc (17) de la plaquette de coupe (3, 3a).

9. Outil de perçage selon l'une ou plusieurs des revendications précédentes, caractérisé par au moins deux nervures de formage de copeaux (14, 14a) agencées l'une à côté de l'autre et associées à un tranchant (12).

10. Outil de perçage selon l'une ou plusieurs des revendications précédentes, caractérisé en ce que les faces de coupe (13) des plaquettes de coupe (3, 3a) sont creusées sous forme concave.

11. Outil de perçage selon l'une ou plusieurs des revendications précédentes, caractérisé en ce que la courbure des nervures de formage de copeaux (14, 14a) est supérieure ou inférieure à celle de la sortie de copeaux libre ou optimale.

12. Outil de perçage selon l'une ou plusieurs des revendications précédentes, caractérisé en ce que la plaquette de coupe est une plaquette de coupe trigonale (30) comprenant un perçage de fixation central (6), dont la face de coupe (13) présente trois nervures radiales (32a, 32b, 32c), lesquelles
- s'étendent chacune approximativement le long de la ligne de liaison entre un coin de la plaquette de coupe (33a, 33b, 33c) et le centre de la plaquette de coupe trigonale (30), et
- dans lesquelles débouche au moins l'une des nervures de formage de copeaux (14) voisines d'un coin (33a, 33b, 33c) de la plaquette de coupe.

13. Outil de perçage selon la revendication 14, caractérisé en ce qu'au moins les nervures de formage de copeaux (14) qui ne débouchent pas dans une nervure radiale (32a, 32b, 32c) s'étendent jusqu'au perçage de fixation central (6).

14. Outil de perçage selon l'une ou plusieurs des revendications précédentes, caractérisé en ce que l'angle de coupe d'une arête de coupe (9) plus éloignée de l'axe (7) de l'outil de perçage possède une valeur positive supérieure à celle d'une arête de coupe (8) de la même plaquette de coupe (3, 3a), qui est située plus près de l'axe (7) de l'outil de perçage.
